# EUROPÄISCHE PATENTSCHRIFT

(11) **EP 0 809 750 B1**
(45) Veröffentlichungstag und Bekanntmachung des Hinweises auf die Patenterteilung: **07.04.1999**
(21) Anmeldenummer: 96904776.0
(22) Anmeldetag: 14.02.1996
(51) Int. Cl.: F01B 9/02, F02B 75/24

(54) **HUBKOLBENMASCHINE, INSBESONDERE BRENNKRAFTMASCHINE, MIT HYPOZYKLOIDISCHEM KURBELGETRIEBE**
RECIPROCATING PISTON ENGINE, ESPECIALLY INTERNAL COMBUSTION ENGINE, WITH HYPOCYCLOIDAL CRANK SHAFT DRIVE
MOTEUR A PISTONS ALTERNATIFS, NOTAMMENT MOTEUR A COMBUSTION INTERNE, A EQUIPAGE MOBILE HYPOCYCLOIDAL

(30) Priorität: 14.02.1995 DE 19504891
(43) Veröffentlichungstag der Anmeldung: 03.12.1997
(73) Patentinhaber: Bayerische Motoren Werke Aktiengesellschaft, 80788 München (DE)
(72) Erfinder: FISCHER, Gert, D-82340 Feldafing (DE)
(86) Internationale Anmeldenummer: EP9600632
(87) Internationale Veröffentlichungsnummer: WO9625588

(56) Entgegenhaltungen:
- EP-A- 0 545 333
- DE-A- 4 205 283
- GB-A- 2 211 272
- US-A- 4 498 372

## Beschreibung

Die Erfindung geht gemäß dem Oberbegriff des Patentanspruches von der US-A 2 271 766 aus.

Aus diesem Dokument ist eine Hubkolbenmaschine mit hypozykloidischem Kurbelgetriebe bekannt, das eine an beiden Enden mit Kolben in diametral angeordneten Zylindern verbundene Schubstange umfaßt. Diese Schubstange besteht aus einem auf einem Hub-Exzenter des hypozykloidischen Getriebes gelagerten Hauptpleuel für einen der Kolben und einem am Lagerdeckel des Hauptpleuels angelenkten, kürzeren Nebenpleuel für den anderen Kolben. Beide Kolben sind zudem mit dem jeweiligen Pleuel gelenkig verbunden, so daß diese bekannte Schubstange knickbar ist und damit insbesondere der Verringerung von aus Toleranzabweichungen bewegter Bauteile des Kurbeltriebes resultierenden Beanspruchungen dient.

Nachteilig bei dieser bekannten Anordnung ist insbesondere der durch die ungleich langen Pleuel bedingte unterschiedliche Kolbenverschleiß.

Der Erfindung liegt die Aufgabe zugrunde, eine Schubstange mit kinematisch günstigerer Knickbarkeit aufzuzeigen.

Diese Aufgabe ist mit dem Patentanspruch 1 gelöst, der sich dadurch kennzeichnet, daß die Schubstange aus um die Achse der Lagerdurchbrechung (für den Hub-Exzenter) winkelbeweglich angeordneten Stangenabschnitten gebildet ist, wobei die Winkelbewegungen der Stangenabschnitte in Abhängigkeit zulässiger Kippbewegungen der mit den jeweiligen Stangenabschnitten fest verbundenen Kolben elastisch begrenzt sind.

Mit dem erfindungsgemäß mittigen Knicken der Schubstange in Verbindung mit einem in Abhängigkeit der Kolbengeometrie festlegbaren Knickmaß ergibt sich in vorteilhafter Weise ein gleichmäßiger und wesentlich reduzierter Kolbenverschleiß. Weiter ermöglicht die erfindungsgemäße Schubstange eine kinematisch sichere Abstützung des hypozykloidischen Kurbelgetriebes beim Durchgang durch die Mittenlage mit den Kolben in einer OT/UT-Lage dadurch, daß die Winkelbewegungen der Stangenabschnitte der mittig knickbaren Schubstange vorzugsweise in Abhängigkeit sich progressiv versteifender Elastizitäten begrenzt sind.

Weiter vorteilhaft ist die Verwendung der erfindungsgemäß gestalteten Knick-Schubstange bei einem hypozykloidischen Kurbelgetriebe mit Wattscher Geradführung. Bekanntlich bewegt sich die zur Achse der Lagerdurchbrechung der Schubstange koaxiale Mitte der Watt-Koppel anstelle längs einer idealen Geradführungslinie entlang einer schwach schlangenförmigen Führungslinie, deren Abweichungen von der idealen Geradführungslinie mittels der Knick-Schubstange in ihren Auswirkungen vorteilhaft reduziert sind.

Vorteilhafte Ausgestaltungen der Erfindung sind in den Unteransprüchen beschrieben. Die Ausgestaltung der Erfindung umfaßt eine aus drei Teilen gebaute Schubstange mit zwei jeweils mit einem Kolben verbundenen Schub-Stangenabschnitten, deren einander zugewandte Endbereiche in einem die Lagerdurchbrechung für den Hub-Exzenter aufweisenden ringförmigen Mittelteil drehwinkelbeweglich geführt angeordnet sind. Am Mittelteil sind in vorteilhafter Weise die Schubstangenabschnitte befestigbar, wodurch in jedem Zylinder der jeweilige Kolben mit dem Schub-Stangenabschnitt zylinderkopfseitig auf einfache Weise montierbar ist. Da hiermit das Durchschieben eines der an einer einstückigen Kolbenstange angeordneten Doppelkolbens von einem Zylinder in den hierzu gegenüberliegenden Zylinder entfällt, kann das Maschinengehäuse mit baulich integrierten, in Richtung der erfindungsgemäßen Schubstange vorspringenden Lageraugen für eine Kurbelwellenlagerung ausgebildet werden. Damit erhöht sich die Steifigkeit des Maschinengehäuses.

Weiter können die erfindungsgemäßen Schub-Stangenabschnitte zur Erzielung einer hohen Biegesteifigkeit unter Beachtung des Kolbendurchmessers größtmöglich beabstandete Streben umfassen, die einerseits mit einem relativ kurzen Kolben und andererseits lagerseitig mit einem Führungsflächen für die Knickbewegung aufweisenden Anschlußbogen einstückig verbunden sind. Diese Ausgestaltung vereinfacht wesentlich die Fertigung der jeweils als Gußteil vorzugsweise aus Leichtmetall gestalteten Schub-Stangenabschnitte.

Da schließlich der in die Lagerdurchbrechung des ringförmigen Mittelteils eingreifende Hub-Exzenter ein Stahlteil ist, wird zur Erzielung optimaler Lagerspiele über den gesamten Bereich der Betriebstemperatur das Mittelteil vorteilhafterweise ebenfalls aus Stahl gefertigt.

Insbesondere ermöglicht schließlich das erfindungsgemäß gegen elastischen Widerstand gesteuert erzielte Ein- bzw. Ausknicken der Schubstange eine quer zur Bewegungsrichtung der Schubstange wirksame Elastizität, die relativ große Toleranzen und Verzüge im Kurbeltrieb selbst sowie zwischen Kurbeltrieb und Maschinengehäuse erlaubt. Vorteilhaft reduzieren sich damit die Fertigungskosten sowie die Reibleistung.

Vorzugsweise ist eine mit dem Maß der Knickung der Schubstange sich progressiv versteifende Elastizität gewählt, wobei mit dem anfänglich niedrigen elastischen Widerstand vorteilhaft geringe Kolbenseitenkräfte bei Winkelbewegungen der Stangenabschnitte im Bereich des halben Kolbenhubes erzielt sind, und der weitere stark progressiv ansteigende elastische Widerstand vorteilhaft einen eindeutigen Wechsel eines Geradführungselementes des hypozykloidischen Kurbelgetriebes von einer Führungsseite zur anderen bei einer Kolben-OT/UT-Lage der Schubstange bewirkt. Weiter kann der progressiv ansteigende Widerstand so gewählt bzw. eingestellt sein, daß sich bei einem vorbestimmten maximalen Widerstands-Wert die Wirkung eines Anschlages ergibt. Eine besonders einfache Ausgestaltung dieser elastischen Winkelanschläge ist mittels durch koaxial durchsetzender Bolzen beaufschlagter Buchsen aus elastischem Material erreicht.

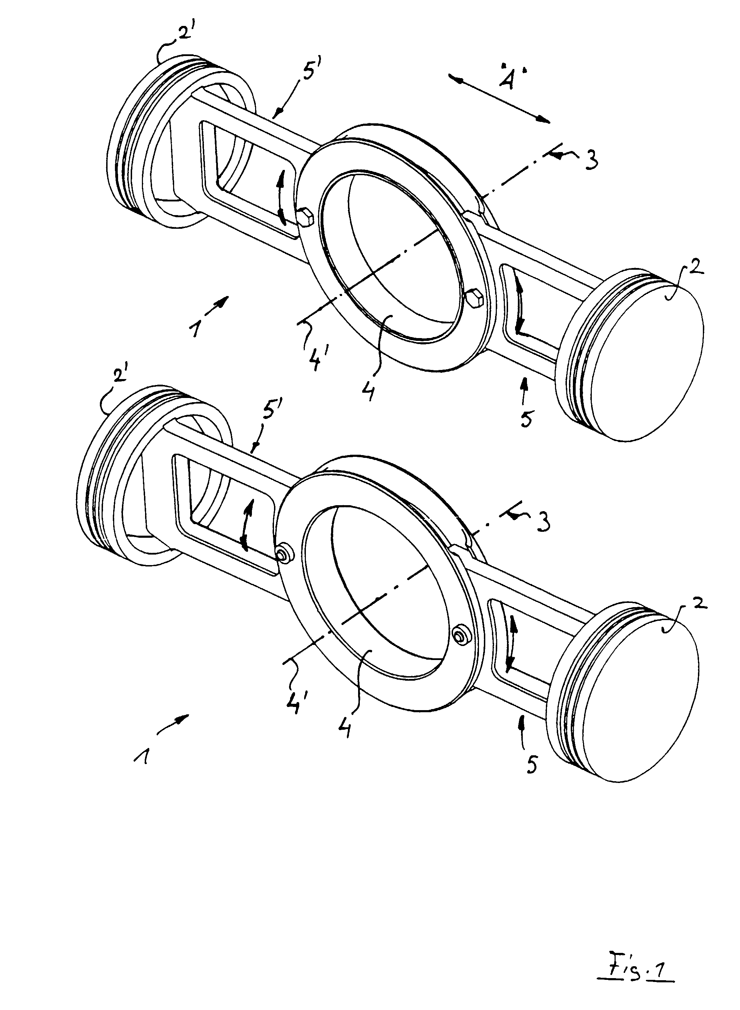

Die Erfindung ist anhand eines bevorzugten, in der Zeichnung dargestellten Ausführungsbeispiels beschrieben. Es zeigt
- Figur 1: eine erfindungsgemäße Schubstange in Vorder- und Rückansicht,
- Figur 2: die Schubstange der Figur 1 in Explosionsdarstellung, und
- Figur 3: eine Schubstange in Explosionsdarstellung mit einem abgewandeltenMittelteil in Montageposition,
- Figur 4: einen Kurvenverlauf progressiver elastischer Versteifung, über dem Knickmaß aufgetragen.

Eine Schubstange 1 ist an beiden Enden mit Kolben 2, 2' ausgerüstet für diametral angeordnete Zylinder einer mit einem hypozykloidischen Kurbelgetriebe ausgerüsteten, nicht gezeigten Hubkolbenmaschine. Die Schubstange 1 weist eine zur Kurbelwellen-Drehachse 3 parallel angeordnete Lagerdurchbrechung 4 zur drehbeweglichen Aufnahme eines nicht gezeigten Hub-Exzenters des hypozykloidischen Kurbelgetriebes auf. Zur Verringerung insbesondere von aus Toleranzabweichungen bewegter Bauteile des Kurbelgetriebes resultierenden Beanspruchungen ist die Schubstange 1 quer zur Hubrichtung gemäß Pfeil "A" knickbar ausgebildet.

Erfindungsgemäß ist die Schubstange 1 aus um die zur Kurbelwellen-Drehachse 3 parallele Achse 4' der Lagerdurchbrechung 4 winkelbeweglich angeordneten Stangenabschnitten 5, 5' gebildet, wobei die Winkelbewegungen der Stangenabschnitte 5, 5' zum mittigen Ein- bzw. Ausknicken der Schubstange 1 in Abhängigkeit zulässiger Kippbewegungen der mit den jeweiligen Stangenabschnitten 5, 5, fest verbundenen Kolben 2, 2' mittels elastischer Anordnungen erzielt sind.

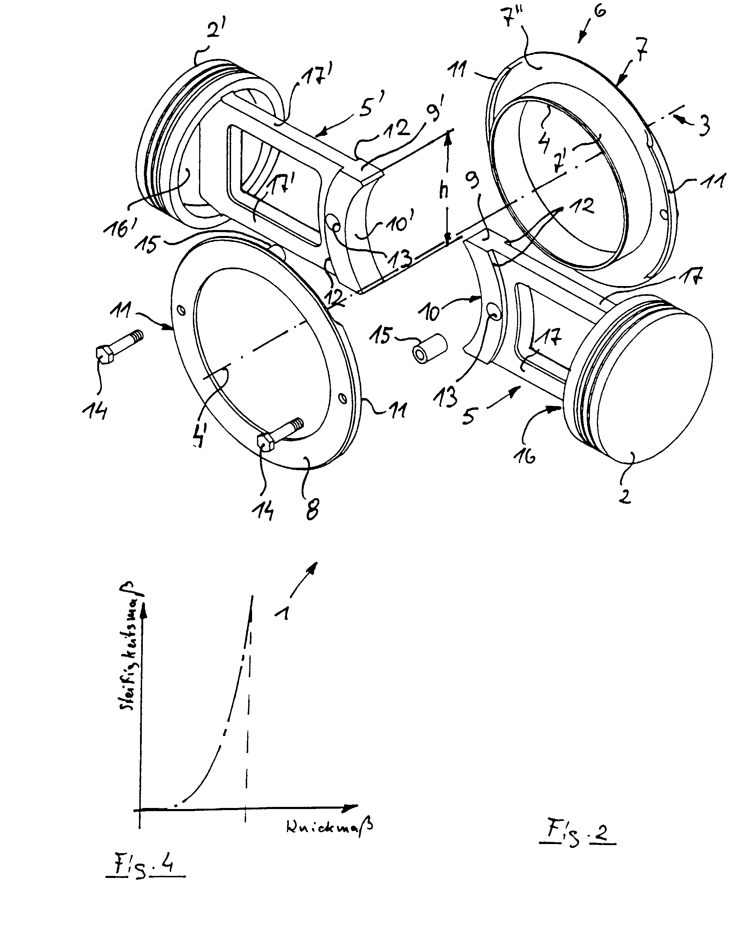

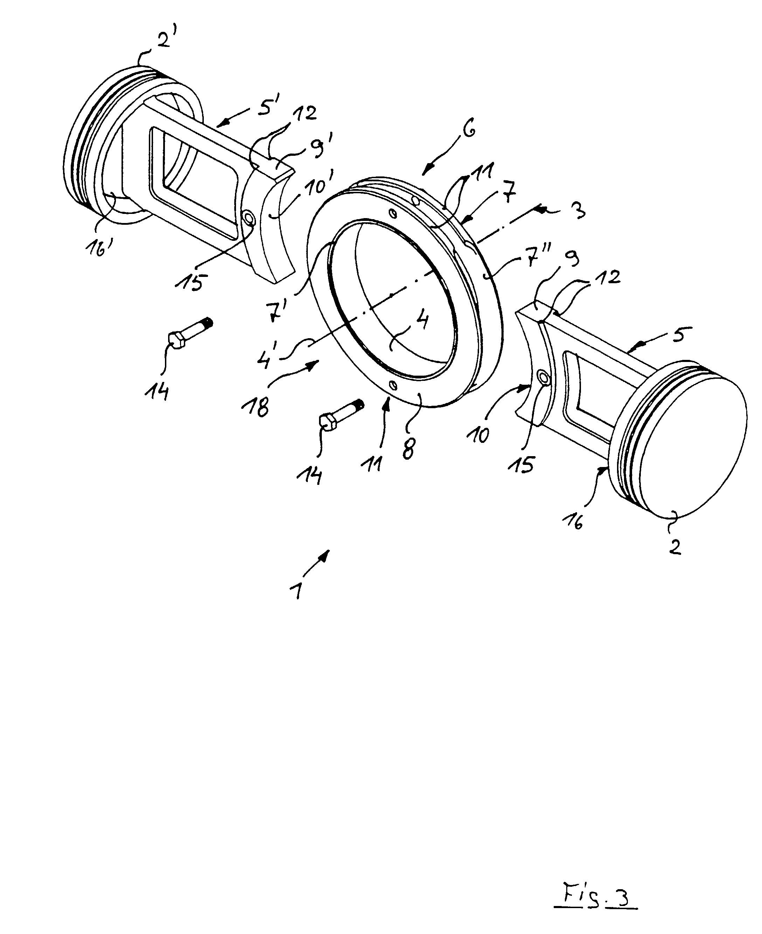

Wie aus Figur 2 ersichtlich, ist die Schubstange 1 erfindungsgemäß aus drei Teilen gebildet. Sie umfaßt neben den beiden Stangenabschnitten 5, 5' ein gesondertes, die Lagerdurchbrechung 4 aufweisendes Mittelteil 6. Dieses Mittelteil 6 ist aus einem Bund-Lagerring 7 und einem im freien Außenumfangsbereich des Lagerringes 7' zentrierten Ringflansch 8 gebildet, wobei die Stangenabschnitte 5, 5' über in Anschlußbögen 9, 9' angeordnete druckseitige Führungsflächen 10, 10' mit dem Außenumfang des Lagerringes 7' in Verbindung stehen. Weiter wirken am Bund 7" des Bund-Lagerringes 7 sowie am Ringflansch 8 zur Achse 4' der Lagerdurchbrechung 4 konzentrisch angeordnete Anschläge 11 mit an den Anschlußbögen 9, 9' der Stangenabschnitte 5, 5' angeordneten, zugseitigen Führungsflächen 12 zusammen.

Ferner stehen Ringflansch 8 und Bund 7" unter Belassung der Winkelbeweglichkeit der Stangenabschnitte 5, 5' um die Achse der Lagerdurchbrechung 4 miteinander derart in Verbindung, daß die Stangenabschnitte 5, 5' bzw. deren Anschlußbögen 9, 9' über Durchbrechungen 13 durchsetzende Schraubbolzen 14 in Ringflansch 8 und Bund 2" abgestützt angeordnet sind, wobei den Schraubbolzen 14 in den Durchbrechungen 13 als elastische Winkelanschläge dienende Buchsen 15 aus elastischem Material zugeordnet sind.

Diese von den Schraubbolzen 14 durchsetzten, elastischen Buchsen 15 begrenzen die Winkelbewegungen der Stangenabschnitte 5, 5' durch eine aus der Buchsenverformung resultierende progressive Versteifung, die gemäß Figur 4 bei einer vorbestimmten Knickung als Anschlag dient.

Weiter zeigt insbesondere die Figur 2, daß jeder der Führungsflächen 10, 12 bzw. 10' und 12 aufweisende Anschlußbogen 9, 9' mit zwei nahe der Außenkontur des jeweiligen Kolbens 2, 2' an dessen Unterseite 16, 16' einstückig anschließenden Streben 17, 17' in Verbindung steht, wobei jeder Anschlußbogen 9, 9' eine gegenüber dem Durchmesser des jeweiligen Kolbens 2, 2' geringes Sehnenmaß "h" aufweist. Damit ist die Montage eines jeweiligen Kolbens 2, 2' mit entsprechendem Stangenabschnitt 5, 5' in einem Zylinder von der Zylinderkopfseite her sichergestellt.

Die Figur 3 zeigt ein Mittelteil 6, bei dem Bund-Lagerring 7 und Ringflansch 8 ein einstückig ausgeführtes oder ein mittels fester Verbindungen einteilig gestaltetes Montageteil 18 bilden, wobei die konzentrischen Anschläge 11 sich im wesentlichen über die Länge der zugseitigen Führungsflächen 12 an den Anschlußbögen 9, 9' erstrecken. Bund 7" und Ringflansch 8 sind in Umfangsrichtung zwischen den diametralen Anschlägen 11 entsprechend der Stärke bzw. Dicke der Anschlußbögen 9, 9' in axialer Richtung beabstandet ausgebildet. Diese Ausgestaltung ermöglicht im Bezug auf das ringförmige Montageteil 18 eine radiale Zuführung der Kolben 2, 2' tragenden Stangenquerschnitte 5, 5' bis deren konzentrische, druckseitige Führungsflächen 10, 10' am Außenumfang des Lagerringes 7' zwischen dem Bund 7" und dem Ringflansch 8 anschlagen. Eine Drehung des Montageteiles 18 auf dem nicht dargestellten, in die Lagerdurchbrechung 4 eingreifenden Hub-Exzenter um etwa 90° bringt die Anschläge 11 an Ringflansch 8 und Bund 7" mit den zugseitigen Führungsflächen 12 der Stangenabschnitte 5, 5' in Überdeckung. Die in Verbindung mit den elastischen Buchsen 15 in den Durchbrechungen 13 als Drehwinkelanschläge wirkenden Schrauben 14 bewirken weiter eine Lagesicherung des Mittelteiles 6 bzw. des Montageteiles 18 relativ zu den Stangenabschnitten 5, 5'.

Der erfindungsgemäße mehrteilige Aufbau der Schubstange 1 ermöglicht in vorteilhafter Weise zur Erzielung eines geringen Lagerspiels in der Lagerdurchbrechung 4 das Mittelteil 6 aus Stahl zu fertigen, wogegen die Kolben 2, 2' mit den zugeordneten Stangenabschnitten 5, 5' zur Massenreduzierung aus Leichtmetall sind.

Vorteilhaft kann das Mittelteil 6 bzw. das Montageteil 18 als Blechpreßteil gefertigt sein, wobei Führungsflächen durch Schleifen bearbeitet sind.

Die erfindungsgemäß mittig gegen einen progressiv zunehmenden, elastischen Widerstand knickbeweglichen und an beiden Enden Kolben tragende Schubstangen (Elasto-Kolben) sind wegen ihres Toleranzausgleiches in Kolben-Hubrichtung vorteilhaft einsetzbar in einer in der deutschen Patentanmeldung 195 09 155 vorgeschlagenen Hubkolbenmaschine, bei der ein hypozykloidisches Kurbelgetriebe über zwei Schubstangen zwei Kolbenpaare in diametralen Zylindern gleichgerichtet antreibt. Für diese Hubkolbenmaschine ist ein Kurbelgetriebe mit einer u.a. aus baulichen Gründen einzigen, zwischen den beiden Schubstangen angeordneten Geradführung vorgeschlagen, vorzugsweise als ein Wattscher Lenker. Da dieser bekanntlich anstelle einer idealen Geradführungslinie zwischen seinen den beiden Kolben-OT/UT-Lagen entsprechenden Extremauslenkungen eine schwach schlangenförmige Führungslinie aufweist, sind deren Abweichungen von der idealen Geradführungslinie mittels der Knick-Schubstange in ihren Auswirkungen vorteilhaft reduziert.

Im Rahmen der Erfindung kann auch eine einstückig gestaltete, beide Kolben 2, 2' verbindende Schubstange mit elastisch nachgiebig ausgebildeten Abschnitten zum mittigen Knicken vorgesehen sein.

## Patentansprüche

1. Hubkolbenmaschine, insbesondere Brennkraftmaschine, mit hypozykloidischem Kurbelgetriebe,
- das eine an beiden Enden mit Kolben (2, 2') in diametral angeordneten Zylindern verbundene Schubstange (1) umfaßt, die
- eine zur Kurbelwellen-Drehachse (3) parallel angeordnete Lagerdurchbrechung (4) zur drehbeweglichen Aufnahme eines Hub-Exzenters des hypozykloidischen Kurbelgetriebes aufweist, und
- die zur Vemngerung von aus Toleranzabweichungen im Kurbelgetriebe und des Maschinengehäuses resultierenden Beanspruchungen quer zur Hubrichtung knickbar ist,
dadurch gekennzeichnet,
- daß die Schubstange (1) aus um die Achse (4') der Lagerdurchbrechung (4) winkelbeweglich angeordneten Stangenabschnitten (5, 5') gebildet ist, wobei
- die Winkelbewegungen der Stangenabschnitte (5, 5') in Abhängigkeit zulässiger Kippbewegungen der mit den jeweiligen Stangenabschnitten (5, 5') fest verbundenen Kolben (2, 2') mittels elastischer Anordnungen (15) erzielt sind.

2. Hubkolbenmaschine nach Anspruch 1, dadurch gekennzeichnet,
- daß die Schubstange (1) ein gesondertes, die Lagerdurchbrechung (4) umfassendes Mittelteil (6) aufweist, mit
- dem die Stangenabschnitte (5, 5') über zur Achse (4') der Lagerdurchbrechung (4) konzentrische, zug- und druckseitig angeordnete Führungen (10, 12; 10', 12) mit korrespondierenden Einrichtungen am Mittelteil (6) winkelbeweglich verbindbar sind, wobei
- jeder Stangenabschnitt (5, 5') über einen elastischen Anschlag (15) gegenüber dem Mittelteil (6) elastisch winkelbegrenzt ist.

3. Hubkolbenmaschine nach Anspruch 1 und 2, dadurch gekennzeichnet,
- daß das Mittelteil (6) aus einem Bund-Lagerring (7) und einem im freien Außenumfangsbereich des Lagerringes (7') zentrierten Ringflansch (8) gebildet ist, wobei
- die Stangenabschnitte (5, 5') über druckseitige Führungsflächen (10, 10') mit dem Außenumfang des Lagerringes (7') des Bund-Lagerringes (7) in Verbindung stehen, und
- am Bund (7") des Bund-Lagerringes (7) sowie am Ringflansch (8) zur Achse (3) der Lagerdurchbrechung (4) konzentrisch angeordnete Anschläge (11) mit zugseitigen Führungsflächen (12) der Stangenabschnitte (5, 5') zusammenwirken.

4. Hubkolbenmaschine nach den Ansprüchen 1 bis 3, dadurch gekennzeichnet,
- daß Ringflansch (8) und Bund (7") unter Belassung der Winkelbeweglichkeit der Stangenabschnitte (5, 5') miteinander in Verbindung stehen, und
- in diesen die Stangenabschnitte (5, 5') über Durchbrechungen (13) durchsetzende Bolzen (14) abgestützt sind, denen
- in den Durchbrechungen (13) als elastische Winkelanschläge dienende Buchsen (15) aus elastischem Material zugeordnet sind.

5. Hubkolbenmaschine nach den Ansprüchen 1 bis 4, dadurch gekennzeichnet, daß die Bolzen Teil eines Schraubbolzens (14) sind.

6. Hubkolbenmaschine nach den Ansprüchen 1 bis 5, dadurch gekennzeichnet,
- daß die Stangenabschnitte (5, 5') ihre Führungsflächen (10, 12; 10', 12) jeweils an einem Anschlußbogen (9, 9') angeordnet aufweisen, der
- mit zwei nahe der Außenkontur eines Kolbens (2, 2') an dessen Unterseite (16, 16') einstückig anschließenden Streben (17, 17') in Verbindung steht, wobei
- jeder Anschlußbogen (9, 9') eine gegenüber dem Durchmesser des jeweiligen Kolbens (2, 2') geringeres Sehnenmaß "h" aufweist.

7. Hubkolbenmaschine nach den Ansprüchen 1 bis 6, dadurch gekennzeichnet,
- daß Bund-Lagerring (7) und Ringflansch (8) ein einstückig ausgeführtes oder ein mittels fester Verbindungen einteilig gestaltetes Montageteil (18) bilden, wobei
- die konzentrischen Anschläge (11) sich im wesentlichen über die Länge der zugseitigen Führungsflächen (12) an den Anschlußbögen (9, 9') erstrecken und
- Bund (7") und Ringflansch (8) in Umfangsrichtung zwischen den diametralen Anschlägen (11) entsprechend der Stärke der Anschlußbögen (9, 9') in axialer Richtung beabstandet ausgebildet sind.

8. Hubkolbenmaschine nach den Ansprüchen 1 bis 7, dadurch gekennzeichnet,
- daß das Mittelteil (6) bzw. das Montageteil (18) aus Stahl gefertigt ist, und
- daß die Kolben (2, 2") mit den zugeordneten Stangenabschnitten (5, 5') aus Leichtmetall sind.

9. Hubkolbenmaschine nach den Ansprüchen 1 bis 8, dadurch gekennzeichnet, daß das Montageteil (18) als Blechpreßteil gefertigt ist.

10. Hubkolbenmaschine nach den Ansprüchen 1 bis 9, dadurch gekennzeichnet, daß die Winkelbewegungen der Stangenabschnitte (5, 5') der mittig knickbaren Schubstange (1) in Abhängigkeit sich progressiv versteifender Elastizitäten (15) begrenzt sind, die ggf. als Anschläge dienen.

11. Hubkolbenmaschine nach den Ansprüchen 1 bis 10, gekennzeichnet durch
- eine Verwendung von zwei mittig knickbaren Schubstangen (1) für zwei über ein hypozykloidisches Kurbelgetriebe gleichgerichtet angetriebenen Kolbenpaaren in diametral angeordneten Zylindern, wobei
- das Kurbelgetriebe mit einer zwischen den Schubstangen (1) angeordneten, einstellbaren Geradführungseinrichtung ausgerüstet ist.

12. Hubkolbenmaschine nach den Ansprüchen 1 bis 11, dadurch gekennzeichnet, daß die Geradführungseinrichtung ein Wattscher Lenker ist.

13. Hubkolbenmaschine nach Anspruch 1, dadurch gekennzeichnet, daß eine einstückig gestaltete Schubstange des Doppelkolbens elastisch nachgiebig ausgebildete Abschnitte aufweist.

## Claims

1. A reciprocating piston engine, especially an internal combustion engine, comprising a hypocycloid crank gear,
- which comprises a connecting rod (1) connected at both ends to pistons (2, 2') in diametrically disposed cylinders,
- the connecting rod being formed with a bearing opening (4) disposed parallel to the crankshaft axis of rotation (3) for rotatably receiving a reciprocating eccentric of the hypocycloid crank gear, and
- the connecting rod being bendable transversely to the stroke direction in order to reduce the stresses resulting from tolerance deviations in the crank gear and the engine block,
characterised in that
- the connecting rod (1) is made up of portions (5, 5') disposed so as to be movable through an angle around the axis (4') of the bearing opening (4), wherein
- the angular movements of the rod portions (5, 5') are obtained by elastic devices (15) in dependence on permissible tilting movements of the pistons (2, 2') permanently connected to the respective rod portions (5, 5').

2. A reciprocating piston engine according to claim 1, characterised in that
- the connecting rod (1) has a separate central part (6) surrounding the bearing opening (4),
- by means of which the rod portions (5, 5') can be connected to corresponding devices on the central part (6) so as to be movable through an angle, via guides (10, 12; 10', 12) disposed on the tension side and the pressure side and concentric with the axis (4') of the bearing opening (4), wherein
- each rod portion (5, 5') is elastically limited to an angle relative to the central part (6) by an elastic stop (15).

3. A reciprocating piston engine according to claim 1 or claim 2, characterised in that
- the central part (6) is made up of a coupling ring bearing (7) and an annular flange (8) centred in the free external peripheral region of the ring bearing (7'), wherein
- the rod portions (5, 5') are connected to the outer periphery of the ring bearing (7') of the coupling ring bearing (7) by guide surfaces (10, 10') on the tension side, and
- stops (11) disposed on the collar (7") of the coupling ring bearing (7) and on the annular flange (8) so as to be concentric with the axis (3) of the bearing opening (4) co-operate with guide surfaces (12) of the rod portions (5, 5') on the tension side.

4. A reciprocating piston engine according to claims 1 to 3, characterised in that
- the annular flange (8) and the collar (7") are connected to one another without reducing the angular mobility of the rod portions (5, 5'), and
- in the said flange and collar, the rod portions (5, 5') are secured by bolts (14) extending through openings (13),
- the bolts being associated with bushes (15) made of elastic material and serving as elastic angle stops in the openings (13).

5. A reciprocating piston engine according to claims 1 to 4, characterised in that the bolts are part of a screw bolt (14).

6. A reciprocating piston engine according to claims 1 to 5, characterised in that
- the rod portions (5, 5') have their guide surfaces (10, 12; 10', 12) disposed on a respective connecting curved member (9, 9'), which
- is connected to two struts (17, 17') which in one piece adjoin the underside (16, 16') of a piston (2, 2') near the outer contour thereof, wherein
- each connecting curved member (9, 9') has a chord length "h" less than the diameter of the respective piston (2, 2').

7. A reciprocating piston engine according to claims 1 to 6, characterised in that
- the coupling ring bearing (7) and the annular flange (8) form an assembly part (18) which is produced in one piece or made one-piece by means of permanent connections, wherein
- the concentric stops (11) extend substantially over the length of the guide surfaces (12) on the tension side on the connecting curved members (9, 9'), and
- the collar (7") and the annular flange (8) in the peripheral direction between the diametral stops (11) are spaced apart in the axial direction in dependence on the thickness of the connecting curved members (9, 9').

8. A reciprocating piston engine according to claims 1 to 7, characterised in that
- the central part (6) and/or the assembly part (18) are made of steel, and
- the pistons (2, 2") and the associated rod portions (5, 5') are made of light metal.

9. A reciprocating piston engine according to claims 1 to 8, characterised in that the assembly part (18) is produced in the form of a metal pressed part.

10. A reciprocating piston engine according to claims 1 to 9, characterised in that the angular movements of the portions (5, 5') of the centrally bendable connecting rod (1) are limited in dependence on progressively stiffening elastic members (15) which if required serve as stops.

11. A reciprocating piston engine according to claims 1 to 10, characterised by
- use of two centrally bendable connecting rods (1') for two pairs of pistons driven in the same direction by a hypocycloid crank gear in diametrically disposed cylinders, wherein
- the crank gear is equipped with an adjustable straight-line mechanism disposed between the connecting rods (1).

12. A reciprocating piston engine according to claims 1 to 11, characterised in that the straight-line mechanism is a Watt's linkage.

13. A reciprocating piston engine according to claim 1, characterised in that a one-piece rod connecting the double piston has elastically flexible portions.

## Revendications

1. Moteur à pistons alternatifs, notamment moteur à combustion interne à transmission de vilebrequin, hypocycloïdale, comprenant
- une bielle (1) dont les deux extrémités portent des pistons (2, 2') de cylindres diamétralement opposés,
- cette bielle ayant un passage de palier (4) parallèle à l'axe de rotation (3) du vilebrequin pour recevoir en rotation un excentrique de translation d'une transmission de vilebrequin, hypocycloïdale et
- cette bielle pouvant flamber transversalement à la direction de déplacement pour réduire des contraintes résultant de différences de tolérance dans le vilebrequin et dans le carter du moteur,
caractérisé en ce que
- la bielle (1) est formée par des segments de tiges (5, 5') mobiles angulairement autour de l'axe (4') du passage de palier (4) et
- les mouvements angulaires des segments de tiges (5, 5') sont obtenus en fonction des mouvements de basculement autorisés des pistons (2, 2') reliés solidairement aux segments d'axes (5, 5') respectifs, par des dispositions élastiques (15).

2. Moteur à pistons alternatifs selon la revendication 1, caractérisé en ce que
- la bielle (1) comporte une partie centrale (6) particulière comportant un passage de palier (4) avec
- des guides (10, 12, 10', 12) du côté de la traction et du côté de la pression, concentriques aux segments de tiges (5, 5') par rapport à l'axe (4') du passage de palier (4), ces guides pouvant être reliés de manière mobile angulairement avec des installations correspondantes de la partie centrale (6), et
- chaque segment de tige (5, 5') est limité angulairement de manière élastique par une butée élastique (15) par rapport à la partie centrale (6).

3. Moteur à pistons alternatifs selon les revendications 1 et 2,
caractérisé en ce que
- la partie centrale (6) est formée d'un anneau de palier à collerettes (7) et d'une bride annulaire (8) de centrage dans la zone périphérique extérieure libre de l'anneau de palier (7'),
- les segments de tiges (5, 5') sont en liaison par des surfaces de guidage (10, 10'), du côté de la pression, avec la périphérie extérieure de l'anneau de palier (7') de la bague de palier composite (7) et
- la collerette (7") de l'anneau de palier à collerettes (7) et la bride annulaire (8), concentriquement à l'axe (3) du passage de palier (4), ont des butées (11) avec des surfaces de guidage (12) du côté de la traction pour les segments de tiges (5, 5').

4. Moteur à pistons alternatifs selon les revendications 1 à 3,
caractérisé en ce que
- la bride annulaire (8) et la collerette (7") sont reliées en laissant subsister une mobilité angulaire pour les segments de tiges (5, 5') et
- dans ces segments, des vis (14) traversent les segments de tiges (5, 5') par des passages (13) et
- dans les passages (13) il y a des manchons (15) en matière élastique servant de butées d'angle élastiques.

5. Moteur à pistons alternatifs selon les revendications 1 à 4,
caractérisé en ce que
les vis sont des boulons (14).

6. Moteur à pistons alternatifs selon l'une des revendications 1 à 5,
caractérisé en ce que
- les segments de tiges (5, 5') comportent des surfaces de guidage (10, 12, 10', 12) chacune sur un arc de raccordement (9, 9'),
- cet arc étant relié à deux entretoises (17, 17') proches du contour extérieur du piston (2, 2') et qui rejoignent en une seule pièce son côté inférieur (16, 16'), et
- chaque arc de raccordement (9, 9') a une longueur de corde (h) inférieure au diamètre du piston (2, 2') respectif.

7. Moteur à pistons alternatifs selon l'une des revendications 1 à 6,
caractérisé en ce que
- la bague de palier à collerette (7) et la bride annulaire (8) constituent une pièce de montage (18) réalisée en une seule partie ou montée par des liaisons solidaires pour ne former qu'une seule partie et
- les butées concentriques (11) s'étendent essentiellement sur la longueur des surfaces de guidage (12), du côté de la traction, sur les arcs de raccordement (9, 9') et
- la collerette (7") et la surface annulaire (8) sont écartées dans la direction axiale, dans la direction périphérique, entre les butées diamétrales (11), en fonction de l'épaisseur des arcs de raccordement (9, 9').

8. Moteur à pistons alternatifs selon les revendications 1 à 7,
caractérisé en ce que
- la partie centrale (6) ou la pièce de montage (18) sont en acier et
- les pistons (2, 2") et les segments de tiges correspondants (5, 5') sont en métal léger.

9. Moteur à pistons alternatifs selon l'une des revendications 1 à 8,
caractérisé en ce que
la pièce de montage (18) est une pièce en tôle pressée.

10. Moteur à pistons alternatifs selon l'une des revendications 1 à 9,
caractérisé en ce que,
les mouvements angulaires des segments de tiges (5, 5') de la bielle (1), flambant au milieu, sont limités en fonction de l'élasticité qui se durcit progressivement (15), et sert le cas échéant de butée.

11. Moteur à pistons alternatifs selon les revendications 1 à 10,
caractérisé par
- l'application de deux bielles (1) susceptibles de flamber au milieu pour deux paires de pistons entraînées dans le même sens par une transmission à vilebrequin, hypocycloïdale dans des cylindres diamétralement opposés, et
- la transmission à vilebrequin est équipée d'une installation de guidage rectiligne, réglable, placée entre les deux bielles (1).

12. Moteur à pistons alternatifs selon les revendications 1 à 11,
caractérisé en ce que
l'installation de guidage rectiligne est un bras de watt.

13. Moteur à pistons alternatifs selon la revendication 1,
caractérisé en ce qu'
une barre de poussée en une seule pièce du double piston comporte des segments réalisés avec une souplesse élastique.
